# NEUE EUROPÄISCHE PATENTSCHRIFT

(11) **EP 2 865 469 B2**
(45) Veröffentlichungstag und Bekanntmachung des Hinweises auf die Entscheidung über den Einspruch: **15.05.2019**
(45) Hinweis auf die Patenterteilung: 07.09.2016
(21) Anmeldenummer: 14002323.5
(22) Anmeldetag: 07.07.2014
(51) Int. Cl.: B23B 31/00, B23B 31/107

(54) **Spanneinrichtung**
Clamping device
Dispositif de serrage

(30) Priorität: 25.10.2013 CH 18072013
(43) Veröffentlichungstag der Anmeldung: 29.04.2015
(73) Patentinhaber: Erowa AG, 5734 Reinach (CH)
(72) Erfinder: Hediger, Hans, 5734 Reinach (CH)
(74) Vertreter: Gramm, Lins & Partner Patent- und Rechtsanwälte PartGmbB

(56) Entgegenhaltungen:
- EP-A1- 1 068 919
- EP-A1- 1 952 922
- US-A- 6 089 557
- US-A1- 2010 019 428
- US-A1- 2011 226 741

## Beschreibung

Die vorliegende Erfindung bezieht sich auf eine gemäss dem Oberbegriff des Anspruchs 1 ausgebildete Spanneinrichtung, einen gemäss dem Oberbegriff des Anspruchs 11 ausgebildeten Werkstückträger für eine Spanneinrichtung und eine gemäß dem Oberbegriff des Anspruchs 15 ausgebildete Dichtungsvorrichtung.

Eine solche Spanneinrichtung und Dichtungsvorrichtung sind aus der EP-A1-1952922 bekannt. Ein solcher Werkstückträger ist aus der US2010/019428 bekannt und eine solche Dichtscheibe ist aus der EP-A1-0818270 bekannt.

Aus der US 6 089 557 ist eine Spanneinrichtung bekannt, bei der ein ringförmiges Dichtelement radial außen am Spannfutter angeordnet ist und radial innen am Werkzeugträger anliegt.

Gattungsgemässe Spanneinrichtungen werden zum positionsdefinierten Festspannen von mit Werkstücken oder Werkzeugen bestückten Werkzeugträgern eingesetzt. Das Spannfutter wird dabei üblicherweise fest auf einem Arbeitstisch einer Bearbeitungsmaschine oder Presse fixiert, während der Werkstückträger wiederholt positionsgenau am Spannfutter fixierbar und auch wieder lösbar ist.

Bekannte Spanneinrichtungen sind mit einem Spannfutter versehen, das eine zentrale Öffnung zur Aufnahme eines am Werkstückträger angeordneten Spannzapfens aufweist. Innerhalb des Spannfutters ist eine Spanneinrichtung angeordnet, mittels welcher der Spannzapfen, und damit der Werkstückträger, gegen das Spannfutter gezogen und festgespannt werden kann. Um eine wiederholt genau Positionierung des Werkstückträgers am Spannfutter zu gewährleisten, ist das Spannfutter vorzugsweise mit mehreren Zentrierzapfen und der Werkstückträger mit einer korrespondierenden Anzahl Zentrieröffnungen versehen. Beim Festspannen des Werkstückträgers am Spannfutter greifen die Zentrierzapfen in die Zentrieröffnungen ein und Positionieren dabei den Werkstückträger gegenüber dem Spannfutter. Im Normalfall sind die Zentrieröffnungen zumindest in einer Richtung, namentlich in radialer Richtung, etwas grösser als der entsprechende Zentrierzapfen, so dass nach dem Festspannen des Werkstückträgers am Spannfutter auf beiden Seiten des Zentrierzapfens ein Spalt zwischen dem jeweiligen Zentrierzapfen und der zugehörigen Zentrieröffnung freibleibt.

Eine grundsätzliche Problematik bei derart ausgebildeten Spanneinrichtungen besteht darin, dass während des Bearbeitungsvorgangs eines an dem Werkstückträger befestigten Werkstücks Schmutz anfallen kann, beispielsweise in Form von Spänen, welcher u.a. über die genannten Spalte zwischen dem jeweiligen Zentrierzapfen und der zugehörigen Zentrieröffnung in das Spannfutter eindringen kann. Zudem besteht die Gefahr, dass neben Schmutz auch andere Werkstoffe/Elemente wie beispielsweise Kühlwasser in das Spannfutter eindringen können. Es versteht sich, dass das Eindringen von Schmutz einerseits im Hinblick auf eine korrekte Funktionsweise des Spannfutters problematisch ist, da beispielsweise Späne zu einem Blockieren des Spannmechanismus führen können, andererseits kann sich das Eindringen von Schmutz auch negativ auf die Repetiergenauigkeit beim Festspannen eines Werkstückträgers auswirken. Um dieser Problematik zu begegnen, sind Spanneinrichtungen bekannt, bei denen am Spannfutter eine Dichtung angeordnet ist, an welcher sich der Werkstückträger mit seiner Unterseite dichtend anlegen kann. Während dies bei runden Werkstückträgem noch vergleichsweise einfach möglich ist, ist das Abdichten insbesondere bei rechteckigen Werkstückträgern schwieriger, da bei rechteckigen Werkstückträger die die Z-Auflage bildenden Auflageflächen zu Gunsten einer hohen Stabilität üblicherweise ganz aussen in den Ecken des Werkstückträgers angeordnet werden. Dadurch verbleibt ausserhalb der Auflageflächen kein Material, das zum Abdichten des Werkstückträgers gegenüber dem Spannfutter genutzt werden könnte.

Ein weiteres Problem besteht darin, dass es verschiedenste Werkstückträger mit unterschiedlichen Geometrien gibt. Zudem sind Werkstückträger mit verschiedensten Aussparungen im Einsatz, wobei die Aussparungen je nach Gestaltung das Abdichten erschweren können. Andererseits können sich aber auch Werkstückträger innerhalb einer Baureihe in den Aussenabmessungen leicht unterscheiden, beispielsweise um 1-2mm.

Die Erfindung zielt darauf ab, eine Spanneinrichtung mit einem Spannfutter und einem daran festspannbaren Werkstückträger derart weiterzubilden, dass die Spanneinrichtung unempfindlicher in Bezug auf Verschmutzung ist, indem der Werkstückträger derart an dem Spannfutter festgespannt werden kann, dass beim Bearbeiten eines an dem Werkstückträger festgespannten Werkstücks kein Schmutz in das Spannfutter, insbesondere in dessen Spannmechanismus, eindringen kann.

Hierzu wird nach der Erfindung eine Spanneinrichtung gemäss dem Anspruch 1 bereitgestellt.

Indem zwischen der Zentrierscheibe und dem Hauptkörper des Werkstückträgers eine Dichtscheibe angeordnet ist, welche die Zentrierscheibe in radialer Richtung überragt, wobei der die Zentrierscheibe in radialer Richtung überragende Bereich der Dichtscheibe derart ausgebildet ist, dass dieser beim Festspannen des Werkstückträgers dichtend an einem Dichtelement der Dichtelementanordnung zur Anlage kommt, kann auf einfache Weise sichergestellt werden, dass die Spanneinrichtung des Spannfutters, insbesondere auch bei rechteckig ausgebildeten Werkstückträgern bzw. Hauptkörpern, unempfindlich in Bezug auf Verschmutzung ist. Eine solche Lösung hat zudem den Vorteil, dass sie weitgehend unabhängig von der Gestaltung und Geometrie des Werkstückträgers ist, da die Abdichtung durch die Dichtscheibe und eine korrespondierendes Dichtelement gewährleistet werden kann.

Bevorzugte Ausführungsformen und Weiterbildungen der Spanneinrichtung sind in den abhängigen Ansprüchen 2 bis 10 umschrieben.

Bei einer besonders bevorzugten Weiterbildung ist die Dichtscheibe parallel zu der Zentrierscheibe angeordnet und im Bereich der Zentrieröffnungen mit Vertiefungen versehen, in welche sich die Zentrierzapfen beim Festspannen des Werkstückträgers am Spannfutter erstrecken können. Bei einer solchen Ausbildung muss nur ein sehr geringer Abstand zwischen der Dichtscheibe und der Zentrierscheibe vorgesehen werden.

Bei einer weiteren bevorzugten Weiterbildung der Spanneinrichtung ist zwischen der Zentrierscheibe und der Dichtscheibe zumindest eine Distanzscheibe derart angeordnet, dass ein axiales Auslenken der Zentrierscheibe im Bereich der Zentrieröffnungen ermöglicht wird. Dies ist eine einfache und kostengünstige Lösung, um ein federelastisches Auslenken der Zentrierscheibe beim Festspannen des Werkstückträgers zu ermöglichen.

Bei einer weiteren bevorzugten Weiterbildung der Spanneinrichtung ist das Dichtelement der Dichtelementanordnung im Randbereich der Aussparung mit einer Dichtlippe versehen. Diese Lippe ermöglicht eine dichte Verbindung zwischen der Dichtplatte und dem Spannfutter.

Bei einer weiteren bevorzugten Weiterbildung der Spanneinrichtung ist der Werkstückträger mit vier Bolzen versehen, deren Stirnseite plan ist und einen Z-Anschlag für den Werkstückträger beim Festspannen am Spannfutter bildet. Dadurch weist der Werkstückträger einen definierten Z-Anschlag auf. Indem diese Bolzen gleichzeitig zum Befestigen der Zentrierscheibe wie auch der Dichtscheibe an dem Hauptkörper des Werkstückträgers ausgebildet sind, können die Bolzen gleichzeitig mehrere Funktionen übernehmen.

Eine weitere Aufgabe der Erfindung liegt darin, einen Werkstückträger vorzuschlagen, der sich in besonders bevorzugter Weise zum Einsatz in einer gattungsgemässen Spanneinrichtung eignet, indem dieser derart an der Spanneinrichtung festgespannt werden kann, dass diese unempfindlich in Bezug auf Verschmutzung ist.

Zur Lösung dieser Aufgabe wird ein Werkstückträger vorgeschlagen, der mit einem Hauptkörper und einer daran befestigten Zentrierscheibe versehen ist, in welche zweite Zentrierelemente in der Form von Zentrieröffnungen eingelassen sind, wobei zwischen der Zentrierscheibe und dem Hauptkörper eine Dichtscheibe angeordnet ist, welche die Zentrierscheibe in radialer Richtung überragt. Das Vorsehen einer derartigen Dichtscheibe hat den Vorteil, dass diese unabhängig von der Gestaltung des Hauptkörpers des Werkstückträgers an das Dichtelement angepasst werden kann.

Bevorzugte Weiterbildungen des Werkstückträgers sind in den abhängigen Ansprüchen 12 bis 14 definiert.

Schliesslich besteht eine weitere Aufgabe der Erfindung darin, eine Dichtungsvorrichtung für eine gattungsgemässe Spanneinrichtung derart auszubilden, dass sie universell einsetzbar ist.

Diese Aufgabe wir mit einer gemäss dem Anspruch 15 ausgebildeten Dichtungsvorrichtung gelöst.

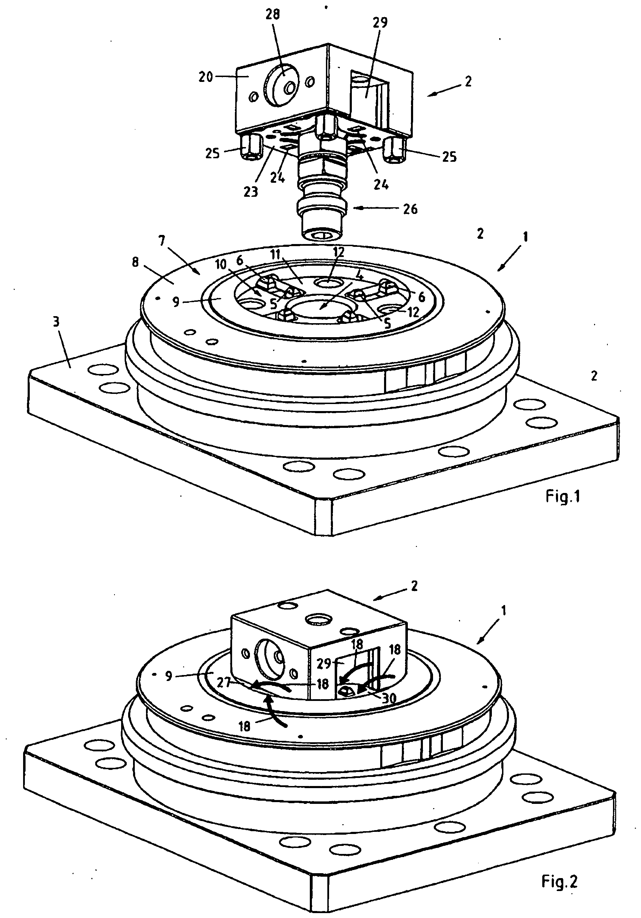

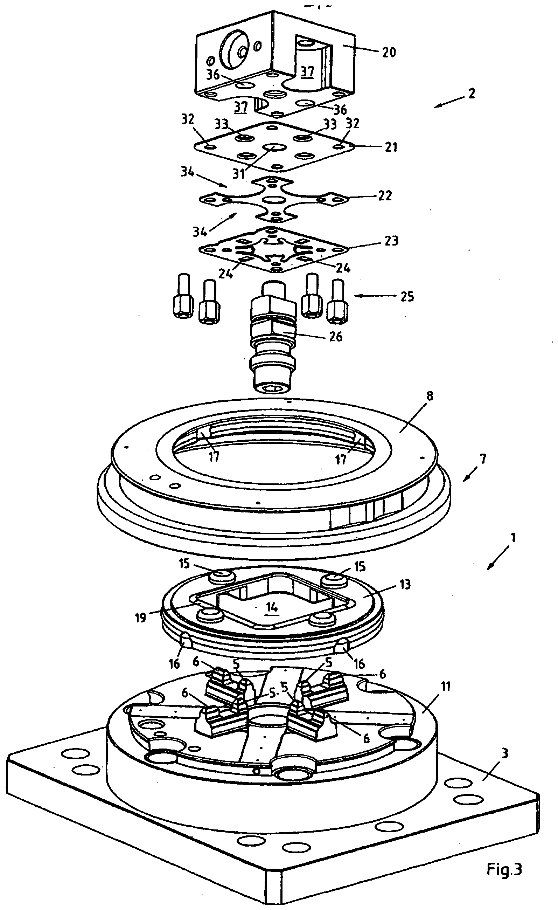

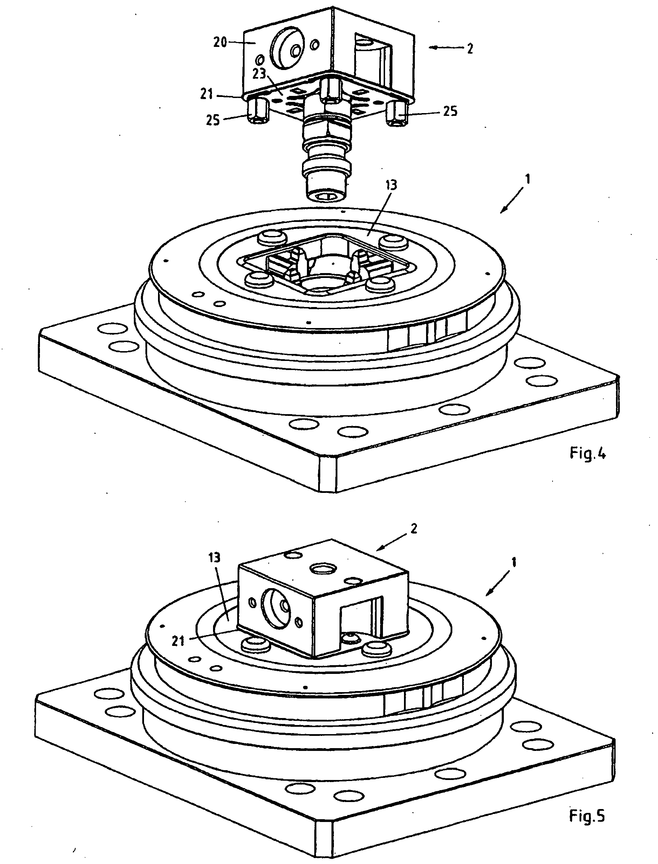

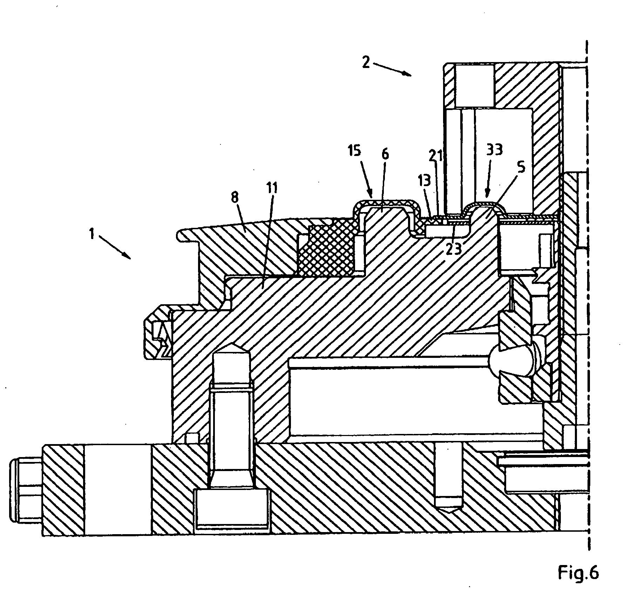

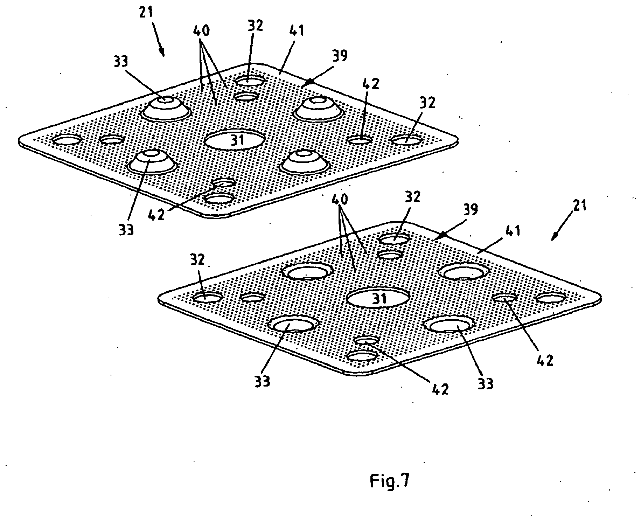

Im Folgenden wird ein bevorzugtes Ausführungsbeispiel der erfndungsgemässen Spanneinrichtung unter Bezugnahme auf die beiliegenden Zeichnungen näher erläutert. In den Zeichnungen zeigt: Fig. 1 ein Spannfutter und einen Werkstückträger einer nach dem Stand der Technik ausgebildete Spanneinrichtung; Fig. 2 das Spannfutter mit dem daran festgespannten Werkstückträger gemäss Fig. 1; Fig. 3 ein Spannfutter und einen Werkstückträger einer erfindungsgemäss ausgebildeten Spanneinrichtung in einer Explosionsdarstellung; Fig. 4 die Spanneinrichtung gemäss Fig. 3 im zusammengesetzten Zustand; Fig. 5 das Spannfutter mit dem daran festgespannten Werkstückträger gemäss Fig. 4, Fig. 6 einen Teil-Längsschnitt durch das Ausführungsbeispiel gemäss Fig. 5, und Fig. 7 eine alternative Ausführungsform einer Dichtscheibe.

Anhand der Fig. 1, welche eine nach dem Stand der Technik ausgebildete Spanneinrichtung zeigt, wird der Aufbau und die Wirkungsweise einer gattungsgemässen Spanneinrichtung näher erläutert. Die Spanneinrichtung umfasst ein Spannfutter 1 und einen daran festspannbaren Werkstückträger 2. Das Spannfutter 1 ist mit einer zentralen Öffnung 4 versehen, welche der Aufnahme eines am Werkstückträger 2 angeordneten Spannzapfens 26 dient. Zum Festspannen des Spannzapfens 26 weist das Spannfutter 1 einen Spannmechanismus auf, wobei die diesbezüglichen Spannmittel nicht dargestellt sind.

Der Werkstückträger 2, auch Palette genannt, dient der Aufnahme von Werkstücken oder Werkzeugen und kann positionsgenau und wiederholbar an dem Spannfutter 1 fixiert werden. Das Spannfutter 1 ist dazu mit Zentrierelementen in Form von Zentrierzapfen 5, 6 versehen, während der Werkstückträger 2 weitere Zentrierelemente in der Form von Zentrieröffnungen 24 aufweist. Im vorliegenden Beispiel weist das Spannfutter 1 vier auf einem inneren Kreis angeordnete Zentrierzapfen 5 und vier weitere, auf einem äusseren Kreis angeordnete Zentrierzapfen 6 auf. Die Zentrieröffnungen 24 des dargestellten Werkstückträgers 2 sind auf die inneren Zentrierzapfen 5 abgestimmt, während die äusseren Zentrierzapfen 6 dem Zusammenwirken mit einem grösseren Werkstückträger dienen, welcher hier jedoch nicht dargestellt ist. Sowohl die vier Zentrierzapfen 5, 6 wie auch die vier Zentrieröffnungen 24 sind jeweils um 90° versetzt zueinander angeordnet

Die vier Zentrieröffnungen 24 sind in eine Zentrierscheibe 23 eingelassen, welche mittels vier Bolzen 25 auf der Unterseite des Werkstückträgers 2 bzw. dessen Hauptkörper 20 befestigt ist. Die Zentrierscheibe 23 ist vorzugsweise aus einem rostfreien Blech gefertigt, wobei die Öffnungen vorzugsweise mittels Stanzen ausgebildet werden. Zwischen der Zentrierscheibe 23 und dem Hauptkörper 20 des Werkstückträgers 2 ist noch eine Distanzscheibe (nicht ersichtlich) derart angeordnet, dass die Zentrierscheibe 23 im Bereich der Zentrieröffnungen 24 geringfügig in Z-Richtung, d.h. in Richtung der Unterseite des Hauptkörpers 20 federelastisch auslenkbar ist. Die Stirnseite des jeweiligen Bolzens 25 ist plan und bildet einen Z-Anschlag für den Werkstückträger 2 beim Festspannen am Spannfutter 1. Vorzugsweise wird die Stirnseite der Bolzen 25 mittels schleifen oder läppen bearbeitet. Das Spannfutter 1 besitzt einen Grundkörper 11, an dem die Zentrierzapfen 5, 6 angeordnet sind und der mit vier Vertiefungen 12 versehen ist, deren Boden als Anschlagfläche für die genannten Bolzen 25 beim Festspannen des Werkstückträgers 2 dient. Der Grundkörper 11 des Spannfutters 1 ist auf einer Grundplatte 3 angeordnet.

Das Spannfutter 1 ist auf der Oberseite mit einer Dichtelementanordnung 7 versehen, welche aus einem ringförmigen Aufsatz 8 und einem runden Dichtelement 9 mit einer zentralen, runden Aussparung 10 besteht. Diese Dichtelementanordnung 7 eignet sich zum Abdichten von runden Werkstückträgem (nicht dargestellt), welche beim Festspannen am Spannfutter 1 mit ihrer Unterseite dichtend an dem Dichtelement 9 zur Anlage kommen. Dazu besitzt der jeweilige Werkstückträger einen etwas grösseren Durchmesser als die zentrale Aussparung 10 des Dichtelements 9. Soll jedoch ein rechteckiger Werkstückträger 2, wie dargestellt, an dem Spannfutter 1 festgespannt werden, so kommt dieser nicht dichtend an dem runden Dichtelement 9 der Dichtelementanordnung 7 zur Anlage, wie nachfolgend noch näher erläutert wird.

Bei dem dargestellten Werkstückträger 2 sind die vier Bolzen 25 in den vier Ecken des Hauptkörpers 20 angeordnet. In die eine Seitenfläche des Werkstückträgers 2 bzw. des Hauptkörpers 20 ist eine runde Ausnehmung 28 eingelassen, welche sich jedoch nicht bis an die Unterseite des Hauptkörpers 20 erstreckt und beispielsweise der Aufnahme eines Identifikationschips dient. In die andere Seite des Hauptkörpers 20 ist eine rechteckige Ausnehmung 29 eingelassen, welche sich bis an die Unterseite erstreckt und dem Festspannen von Werkstücken von unten durch den Werkstückträger dient. Auf der der rechteckigen Ausnehmung 29 gegenüberliegenden Seite ist der Hauptkörper 20 ebenfalls mit einer entsprechenden Ausnehmung versehen. Der hier dargestellte Werkstückträger 2 steht stellvertretend für eine Vielzahl von unterschiedlichsten Werkstückträgern, welche sich sowohl hinsichtlich der Dimensionen wie auch der Gestaltung und der Geometrie unterscheiden können.

Beim Festspannen des Werkstückträgers 2 am Spannfutter 1 dringt der jeweilige Zentrierzapfen 5 in die zugehörige Zentrieröffnung 24 der Zentrierscheibe 23 ein. Dabei kommen die Seitenflächen des konischen Zentrierzapfens 5 an den die Zentrieröffnung 24 begrenzenden Seitenwänden der Zentrierscheibe 23 zur Anlage, wodurch der Werkstückträger 2 gegenüber dem Spannfutter 1 ausgerichtet wird. Indem vier um 90° versetzte Zentrierzapfen 5 und eine korrespondierende Anzahl von Zentrieröffnungen 24 vorgesehen ist, wird der Werkstückträger 2 beim Festspannen am Spannfutter 1 in X- und Y-Richtung sowie bezüglich der Winkellage um die Z-Achse ausgerichtet. Da die jeweilige Zentrieröffnung 24 jedoch etwas länger ist als der jeweilige Zentrierzapfen 5, bleibt auf beiden Seiten des jeweiligen Zentrierzapfens 5 eine spaltförmige Öffnung in der Zentrierscheibe 23 frei.

Die Fig. 2 zeigt das Spannfutter 1 zusammen mit dem daran festgespannten Werkstückträger 2. Wie erkennbar ist, besteht zwischen der jeweiligen Seitenfläche des Werkstückträgers 2 und dem Dichtelement 9 ein Spalt 27, 30, wobei der entlang der einen Seite verlaufende Spalt 27 relativ klein bzw. eng ist, während der entlang der anderen, mit einer rechteckigen Ausnehmung 29 versehenen Seite verlaufende Spalt 30 vergleichsweise gross bzw. breit ist. Sowohl über den engen Spalt 27 wie auch den breiten Spalt 30 kann jedoch Schmutz in das Innere des Spannfutters 1 gelangen, was durch Pfeile 18 angedeutet ist und zu den eingangs angesprochenen Problemen führen kann. Der Schmutz kann sowohl seitlich entlang der jeweiligen Stirnseite der Zentrierscheibe 23 als auch über den auf beiden Seiten zwischen einem Zentrierzapfen und der jeweiligen Zentrieröffnung bestehenden Spalt in das Spannfutter 1 eindringen. Auch über den Spalt zwischen der Zentrierscheibe 23 und dem Hauptkörper 20 sowie allfällige Durchbrüche oder Öffnungen in der Zentrierscheibe 23 kann Schmutz in das Spannfutter 1 eindringen.

Die Fig. 3 zeigt eine efindungsgemäss ausgebildete Spanneinrichtung in einer Explosionsdarstellung, namentlich ein Spannfutter 1 und einen Werkstückträger 2. Neben dem an der Grundplatte 3 befestigten Grundkörper 11 umfasst das Spannfutter 1 wiederum eine Dichtelementanordnung 7 bestehend aus einem ringförmigen Aufsatz 8 und einem runden Dichtelement 13. Die zentrale Aussparung 14 des Dichtelements 13 ist in diesem Fall an die Form und Grösse des Werkstückträgers 2 angepasst und rechteckig ausgebildet. Auf der Oberseite des Dichtelements 13 ist eine entlang der Öffnung 14 verlaufende, elastisch nachgiebige Dichtlippe 19 angeordnet. Die Seitenfläche des Dichtelements 13 ist mit vier nockenartigen Vorsprüngen 16 versehen, von denen aus dieser Darstellung nur deren zwei ersichtlich sind. Der ringförmige Aufsatz 8 weist auf der Innenseite Ausnehmungen 17 auf, welche in Form und Lage mit den nockenartigen Vorsprüngen 16 korrespondieren. Beim Einsetzen des Dichtelements 13 in den ringförmigen Aufsatz 8 greifen die genannten Vorsprünge 16 in die Ausnehmungen 17 ein, so dass das Dichtelement 13 in Relation zum ringförmigen Aufsatz 8 ausgerichtet wird. Das Dichtelement 13 ist zudem mit vier kreisförmigen, sich über die Oberfläche erstreckenden Erhöhungen 15 versehen. Auf der Rückseite dieser Erhöhungen 15 sind Aussparungen in das Dichtelement 13 eingelassen, in welche sich die vier äusseren Zentrierzapfen 6 erstrecken können. Der ringförmige Aufsatz 8 wird vorzugsweise mittels radial oder axial angeordneten Schrauben (nicht dargestellt) an dem Grundkörper 11 des Spannfutters 1 befestigt.

Der im Querschnitt gesehen im wesentlichen quadratisch ausgebildete Werkstückträger 2 der erfindungsgemäss ausgebildeten Spanneinrichtung umfasst eine Dichtscheibe 21, auf der Unterseite des Hauptkörpers 20 befestigt wird. Nach unten schliessen sich daran eine Distanzscheibe 22, die Zentrierscheibe 23 sowie der Spannzapfen 26 an. Zudem sind vier Bolzen 25 erkennbar, welche dem Befestigen der genannten Scheiben 21, 22, 23 an dem Hauptkörper 20 dienen und deren Stirnseite gleichzeitig eine Z-Auflage bilden. Die Bolzen 25 bilden demnach sowohl Befestigungsbolzen wie auch Distanzbolzen.

Die im wesentlichen quadratisch ausgebildete Dichtscheibe 21 besitzt neben einer zentralen Öffnung 31 zur Aufnahme des Spannzapfens 26 vier Öffnungen 32, welche im Bereich der Ecken angeordnet sind und der Befestigung der Dichtscheibe 21 mittels der Bolzen 25 dienen. Zudem weist die Dichtscheibe 21 im Bereich der Zentrieröffnungen 24 der Zentrierscheibe 23 vier sich nach oben in Richtung der Unterseite des Hauptkörpers 20 erstreckende Vertiefungen 33 auf, in welche sich die inneren Zentrierzapfen 5 des Spannfutters 1 beim Festspannen des Werkstückträgers 2 erstrecken können. Die Vertiefungen 33 der Dichtscheibe 21 sind durch materialplastische Verformung ausgebildet und werden vorzugsweise mittels Tiefziehen hergestellt. Dadurch kann die Dichtscheibe 21 einstückig und damit vergleichsweise kostengünstig hergestellt werden. Die Dichtscheibe 21 ist vorzugsweise aus einem rostfreien Blech gefertigt, wobei die Löcher/Öffnungen vorzugsweise mittels Stanzen ausgebildet werden.

Der Hauptkörper 20 des Werkstückträgers 2 ist mit bis auf die Unterseite reichenden Aussparungen 37 bzw. in die Unterseite eingelassenen Bohrungen 36 versehen, derart, dass sich die Vertiefungen 33 in der Dichtscheibe 21, welche auf der dem Hauptkörper 20 zuzuwenden Seite Erhöhungen bilden, in die entsprechenden Bohrungen 36 bzw. Aussparungen 37 erstrecken können. Beim Befestigen der Dichtscheibe 21 an der Unterseite des Hauptkörpers 20 kommt diese mit ihrer planen Oberseite flächig, und damit auch dicht, an der planen Unterseite des Hauptkörpers 20 zur Anlage. Somit bildet die Dichtscheibe 21, ggf. zusammen mit der Unterseite des Werkstückträgers 2, im festgespannten Zustand des Werkstückträgers 2 am Spannfutter 1 eine Art Deckel, der dichtend an dem Dichtelement 13 zur Anlage kommt und das Spannfutter 1 nach oben hin abdichtet.

Die Distanzscheibe 22 ist kreuzartig ausgebildet, indem sie im Bereich der Zentrieröffnungen 24 der Zentrierscheibe 23 mit vier halbrunden Aussparungen 34 versehen ist. Diese Aussparungen 34 ermöglichen, dass die Zentrierscheibe 23 im Bereich der Zentrieröffnungen 24 in Z-Richtung, namentlich in Richtung der Unterseite des Hauptkörpers 20, geringfügig auslenkbar ist. Eine elastische Auslenkbarkeit der Zentrierscheibe 23 wird benötigt, um eine abschliessende Positionierung des Werkstückträgers 2 in Z-Richtung zu ermöglichen, da nach dem Ausrichten des Werkstückträgers in X- und Y-Richtung zwischen der Stirnseite der Bolzen 25 und der entsprechenden Anlagefläche am Spannfutter 1 noch ein kleiner Spalt in der Grössenordnung von einigen hundertstel Millimetern besteht. Das Ausrichten des Werkstückträgers 2 in X- und Y-Richtung erfolgt durch loses Auflegen des Werkstückträgers 2 auf das Spannfutter 1. Bei diesem losen, spannkraftfreien Auflegen des Werkstückträgers 2 dringen die Zentrierzapfen 5 des Spannfutters 1 in die Zentrieröffnungen 24 der Zentrierplatte 23 ein. Dabei legen sich die Seitenflächen der konischen Zentrierzapfen 5 an den beiden seitlichen Kanten der jeweiligen Zentrieröffnung 24 an und richten den Werkstückträger 2 in X- und Y-Richtung aus. Nach dem losen Auflegen des Werkstückträgers 2 besteht noch der besagte kleine Spalt zwischen der Stirnseite des jeweiligen Bolzens 25 und der entsprechenden Anlagefläche am Spannfutter 1. Die abschliessende Z-Positionierung erfolgt dann, indem der Spannmechanismus des Spannfutters 1 an dem Spannzapfen 26 des Werkstückträgers 2 angreift und diesen heranzieht. Dabei wird die Zentrierscheibe 23 durch die Zentrierzapfen 5 im Bereich der Zentrieröffnungen 24 geringfügig in Z-Richtung ausgelenkt. Beim Festspannen des Werkstückträgers 2 an dem Spannfutter 1 kommt dieser mit seiner Dichtscheibe 21 dicht an der Dichtlippe 19 des Dichtelements 13 zu Anlage.

Durch das Vorsehen einer Dichtscheibe 21 der gezeigten Art können einerseits die Bolzen 25 in den vier Ecken, und damit sehr weit aussen, an dem Werkstückträger 2 bzw. dessen Hauptkörper 20 angebracht werden, wobei gleichzeitig sichergestellt werden kann, dass das Spannfutter 1, bei daran festgespanntem Werkstückträger 2, weitgehend gegen eindringenden Schmutz geschützt ist. Das Anbringen der Bolzen 25 in den vier Ecken des Werkstückträgers 2 trägt zu einer guten Stabilität des am Spannfutter 1 festgespannten Werkstückträgers 2 bei, da die Bolzen 25 gleichzeitig die Z-Auflage für den Werkstückträger 2 bilden.

Da sich die Zentrierzapfen 5 beim Festspannen des Werkstückträgers 2 am Spannfutter 1 in die Vertiefungen 33 der Dichtscheibe 21 erstrecken können, kann die Zentrierscheibe 23 in Z-Richtung sehr nahe an der Dichtscheibe 21 angeordnet werden. Theoretisch genügt es, wenn die Zentrierscheibe 23 um den Betrag der maximal möglichen federelastischen Auslenkung der Zentrierscheibe 23 im Bereich der Zentrieröffnungen 24 von der Dichtscheibe 21 beabstandet ist.

Die Dichtelementanordnung 7 bildet zusammen mit der Dichtscheibe 21 eine Dichtungsvorrichtung, welche universell einsetzbar ist, indem sie an verschiedenste Werkstückträger und Spannfutter angepasst werden kann. Die Dichtungsvorrichtung eignet sich dabei sowohl für den Einsatz an neuen Spannvorrichtungen wie auch zum Nachrüsten von bestehenden Spannvorrichtungen.

Die Figur 4 zeigt das Spannfutter 1 und den Werkstückträger 2 gemäss Fig. 3 jeweils im zusammengesetzten Zustand. Wie ersichtlich, überragt die Dichtscheibe 21 die Zentrierscheibe 23 in radialer Richtung. Vorzugsweise überragt die Dichtscheibe 21 die Zentrierscheibe 23 in radialer Richtung um ca. 1 bis 3mm. Neben der Zentrierscheibe 23 überragt die Dichtscheibe 21 auch die vier ganz aussen am Hauptkörper 20 angeordneten Bolzen 25 in radialer Richtung. Dadurch weist die Dichtscheibe 21 einen aussen entlang der Zentrierscheibe 23 umlaufenden Rand auf, mittels welchem sich die Dichtscheibe 21 bzw. der Werkstückträger 2 dichtend an dem Dichtelement 13 anlegen kann.

Die Fig. 5 zeigt den am Spannfutter 1 festgespannten Werkstückträger 2 gemäss Fig. 4. Der Werkstückträger 2 legt sich mit dem die Zentrierscheibe in radialer Richtung überragenden Bereich der Dichtscheibe 21 an dem Dichtelement 13 an. Es versteht sich, dass das am Spannfutter 1 angeordnete Dichtelement 13 derart auf den Werkstückträger 2 abgestimmt ist, dass sich der äusserste Bereich der Dichtscheibe 21 mit der Unterseite dichtend an dem Dichtelement 13 anlegt, sobald der Werkstückträger 2 an dem Spannfutter 1 festgespannt ist. Für eine sichere Anlage des Werkstückträgers 2 an dem Dichtelement 13 wird neben dem Gewicht des Werkstückträgers 2 auch die axiale Bewegung (Z-Richtung) des Werkstückträgers 2 beim Festspannen im Zusammenhang mit der Elastizität des Dichtelements 13 genutzt.

Die Figur 6 zeigt einen Teil-Längsschnitt durch den am Spannfutter 1 festgespannten Werkstückträger 2 gemäss Fig. 5. In dieser Darstellung ist erkennbar, wie der die Zentrierscheibe 23 in radialer Richtung überragende Bereich der Dichtscheibe 21 an dem Dichtelement 13 zur Anlage kommt. Zudem ist ersichtlich, dass sich der innere Zentrierzapfen 5 in die Vertiefung 33 der Dichtscheibe 21 erstreckt. Der äussere Zentrierzapfen 6 erstreckt sich in die Rückseite der Erhöhung 15 des Dichtelements 13. Schliesslich ist erkennbar, dass der ringförmige Aufsatz 8 das Dichtelement 13 gegen die Oberfläche des Grundkörpers 11 des Spannfutters 1 drückt. Da die Dichtscheibe 21, zusammen mit dem ringförmigen Aufsatz 8 und dem Dichtelement 13, das Spannfutter 1 nach oben hin abdichtet, kann bei festgespanntem Werkstückträger 2 von oben kein Schmutz in das Innere des Spannfutters 1 eindringen.

Die Fig. 7 zeigt eine alternative Ausführungsform der Dichtscheibe 21 in einer Ansicht von oben und unten. Um der Neigung der Dichtscheibe 21 hinsichtlich Deformation zu begegnen, wird die aus Metall bestehende Dichtscheibe 21 mit einer Prägung 39 versehen. Die Prägung 39 wird durch eine Vielzahl von Vertiefungen 40 gebildet, die mittels plastischer Kaltverformung in die Dichtscheibe 21 eingedrückt werden. Vorzugsweise werden beide Planseiten der Dichtscheibe 21 mit einer Prägung 39 versehen. Die Tiefe der einzelnen Vertiefungen 40 wie auch deren Anzahl und Form wird den Anforderungen entsprechend gewählt. Jedenfalls wir die Prägung 39 derart gewählt, dass die Formstabilität gegenüber einem "Glattblech" verbessert wird. Als besonders Vorteilhaft hat sich eine Waffelprägung erwiesen. Vorzugsweise wird die Prägung 39 mittels Stempeln oder Walzen aufgebracht. Zumindest auf der dem Spannfutter 1 zuzuwendenden Unterseite der Dichtscheibe 21 verbleibt entlang des Randes ein prägefreier Streifen 41, an welchem sich die elastisch nachgiebige Dichtlippe 19 des Dichtelements 13 (Fig. 3) dichtend anlegen kann. Besonders bevorzugt wird die Prägung nach dem Tiefziehen der Vertiefungen 33 aufgebracht. Dadurch wird dem Verzug durch das Tiefziehen entgegengewirkt und zum Teil aufgehoben. Indem die Dichtscheibe 21 beidseitig mit einer Prägung 39 versehen wird, verringert sich jedenfalls deren Neigung hinsichtlich einer Deformation. Das Stanzen der Öffnungen 31, 32, 42 hingegen erfolgt vorzugsweise nach dem Anbringen der Prägung. Neben den schon vorgängig erwähnten Öffnungen 31, 32 sind Montageöffnungen 42 erkennbar, welche radial innerhalb der Öffnungen 32 (Befestigungsbohrungen) angeordnet sind und bei der Montage der Dichtscheibe 21 zusammen mit anderen Elementen ggf. hilfreich sein können.

Zusammenfassend lässt sich festhalten, dass sich die erfindungsgemäss gestaltete Spanneinrichtung eignet, um insbesondere einen rechteckigen Werkstückträger derart an einem Spannfutter festzuspannen, dass das Spannfutter weitgehend vor Verschmutzung geschützt ist.

Dabei können sowohl neue Spanneinrichtungen erfindungsgemäss gestaltet werden. Andererseits eignet sich die Erfindung aber auch, um bestehende Spanneinrichtungen nachzurüsten. Sofern schon das bisherige Spannfutter mit einem Dichtelement bzw. einer Dichtelementanordnung versehen ist, kann es genügen, wenn lediglich die Werkstückträger mit einer an das Dichtelement angepassten Dichtscheibe nachgerüstet werden. Andererseits kommen natürlich insbesondere auch Lösungen in Frage, bei denen das Spannfutter mit einer Dichtelementanordnung und der Werkstückträger mit einer Dichtscheibe nachgerüstet werden.

## Patentansprüche

1. Spanneinrichtung mit einem Spannfutter (1) und einem daran festspannbaren Werkstückträger (2),
wobei das Spannfutter (1) erste Zentrierelemente in der Form von Zentrierzapfen (5) aufweist und
der Werkstückträger (2) mit einem Hauptkörper (20) und einer daran befestigten Zentrierscheibe (23) versehen ist,
in welche zweite Zentrierelemente in der Form von Zentrieröffnungen (24) eingelassen sind, und
wobei die Zentrierzapfen (5) des Spannfutters (1) derart in die Zentrieröffnungen (24) des Werkstückträgers (2) einzugreifen bestimmt sind, dass letzterer gegenüber dem Spannfutter (1) in X- und Y-Richtung ausrichtbar ist, und wobei das Spannfutter (1) auf der Seite der Zentrierzapfen (5) mit einer Dichtelementanordnung (7) versehen ist,
**dadurch gekennzeichnet, dass**
zwischen der Zentrierscheibe (23) und dem Hauptkörper (20) des Werkstückträgers (2) eine Dichtscheibe (21) angeordnet ist,
welche die Zentrierscheibe (23) in radialer Richtung überragt,
wobei der die Zentrierscheibe (23) in radialer Richtung überragende Bereich der Dichtscheibe (21) derart ausgebildet ist, dass dieser beim Festspannen des Werkstückträgers (2) dichtend an einem Dichtelement (13) der Dichtelementanordnung (7) zur Anlage kommt.

2. Spanneinrichtung nach Anspruch 1, **dadurch gekennzeichnet, dass** die Dichtscheibe (21) parallel zu der Zentrierscheibe (23) angeordnet und im Bereich der Zentrieröffnungen (24) der Zentrierscheibe (23) mit Vertiefungen (33) versehen ist,
in welche sich die Zentrierzapfen (5) beim Festspannen des Werkstückträgers (2) am Spannfutter (1) erstrecken können.

3. Spanneinrichtung nach Anspruch 1 oder 2, **dadurch gekennzeichnet, dass** zwischen der Zentrierscheibe (23) und der Dichtscheibe (21) zumindest eine Distanzscheibe (22) derart angeordnet ist, dass ein axiales Auslenken der Zentrierscheibe (23) im Bereich der Zentrieröffnungen (24) ermöglicht wird.

4. Spanneinrichtung nach Anspruch 3, **dadurch gekennzeichnet, dass** die Distanzscheibe (22) im Bereich der Zentrieröffnungen (24) der Zentrierscheibe (23) mit Aussparungen (34) versehen ist.

5. Spanneinrichtung nach einem der vorhergehenden Ansprüche, **dadurch gekennzeichnet, dass**
der Werkstückträger (2) im Querschnitt gesehen im wesentlichen rechteckig, insbesondere quadratisch, ausgebildet ist und dass
das Dichtelement (13) der Dichtelementanordnung (7) eine zentrale Aussparung (14) aufweist,
deren Form mit der Form des Werkstückträgers (2) korrespondiert, und dass die Dichtscheibe (21) an die Form der Aussparung (14) angepasst ist und diese lateral um einen vorbestimmten Betrag, vorzugsweise um ca. 1-5 mm, überragt.

6. Spanneinrichtung nach Anspruch 5, **dadurch gekennzeichnet, dass** das Dichtelement (13) der Dichtelementanordnung (7) im Randbereich der Aussparung mit einer Dichtlippe (19) versehen ist.

7. Spanneinrichtung nach einem der vorhergehenden Ansprüche, **dadurch gekennzeichnet, dass**
der Werkstückträger (2) mit vier Bolzen (25) versehen ist,
deren Stirnseite plan ist und
einen Z-Anschlag für den Werkstückträger (2) beim Festspannen am Spannfutter (1) bildet.

8. Spanneinrichtung nach Anspruch 7, **dadurch gekennzeichnet, dass** die Bolzen (25) gleichzeitig zum Befestigen der Zentrierscheibe (23) wie auch der Dichtscheibe (21) an dem Hauptkörper (20) des Werkstückträgers (2) ausgebildet sind.

9. Spanneinrichtung nach einem der vorhergehenden Ansprüche, **dadurch gekennzeichnet, dass**
die Dichtelementanordnung (7) einen ringförmigen Aufsatz (8) umfasst,
der zur Aufnahme des Dichtelements (13) ausgebildet und
auf einen Grundkörper (11) des Spannfutters (1) aufsetzbar und daran befestigbar ist.

10. Spanneinrichtung nach einem der vorhergehenden Ansprüche, **dadurch gekennzeichnet, dass**
zumindest eine Planseite der Dichtscheibe (21) mit einer Prägung (39) versehen ist.

11. Werkstückträger für eine nach einem der vorhergehenden Ansprüche ausgebildete Spanneinrichtung (1),
wobei der Werkstückträger (2) mit einem Hauptkörper (20) und einer daran befestigten Zentrierscheibe (23) versehen ist,
in welche zweite Zentrierelemente in der Form von Zentrieröffnungen (24) eingelassen sind, **dadurch gekennzeichnet, dass**
zwischen der Zentrierscheibe (23) und dem Hauptkörper (20) eine Dichtscheibe (21) angeordnet ist,
welche die Zentrierscheibe (23) in radialer Richtung überragt.

12. Werkstückträger (2) nach Anspruch 11, **dadurch gekennzeichnet, dass** zwischen der Dichtscheibe (21) und der Zentrierscheibe (23) zumindest eine Distanzscheibe (22) derart angeordnet ist, dass die Zentrierscheibe (23) im Bereich der Zentrieröffnungen (24) in Richtung des Hauptkörpers (20) federelastisch auslenkbar ist.

13. Werkstückträger (2) nach Anspruch 11 oder 12, **dadurch gekennzeichnet, dass** die Dichtscheibe (21)
einstückig ausgebildet ist und
im Bereich der Zentrieröffnungen (24) der Zentrierscheibe (23) mit materialplastisch ausgebildeten Vertiefungen (33) versehen ist.

14. Werkstückträger (2) nach einem der Ansprüche 11 bis 13, **dadurch gekennzeichnet, dass**
der Werkstückträger (2) mit vier Bolzen (25) versehen ist, deren Stirnseite eine plane, als Z-Anschlag dienende Fläche aufweist, wobei die Bolzen (25) gleichzeitig zum Befestigen der Zentrierscheibe (23) wie auch der Dichtscheibe (21) an dem Hauptkörper (20) des Werkstückträgers (2) ausgebildet sind.

15. Dichtungsvorrichtung für eine nach einem der Ansprüche 1 bis 10 ausgebildete Spanneinrichtung (1),
**dadurch gekennzeichnet, dass**
die Dichtungsvorrichtung eine am Spannfutter (1) zu befestigende Dichtelementanordnung (7) und eine am Werkstückträger (2) zu befestigende Dichtscheibe (21) umfasst, wobei die Dichtelementanordnung (7) einen ringförmigen Aufsatz (8) und ein mit einer zentralen Aussparung (14) versehenes Dichtelement (13) aufweist, welches mittels des ringförmigen Aufsatzes (8) an dem Spannfutter (1) fixierbar ist, und wobei die Aussparung (14) im Wesentlichen rund oder quadratisch ausgebildet ist und die Form der Dichtscheibe (21) mit der Form der Aussparung (14) korrespondiert, und wobei der Durchmesser bzw. die Seitenlänge der Dichtscheibe (21) um zumindest 2mm grösser ist als die genannte Aussparung (14) des Dichtelements (13).

## Claims

1. A clamping fixture comprising a chuck (1) and for locking thereto a workpiece pallet (2), said chuck (1) comprising first centering members in the form of centering spigots (5) and said workpiece pallet (2) is provided with a main body (20) and secured thereto a centering disk (23) into which second centering members in the form of centering openings (24) are machined, and said centering spigots (5) of said chuck (1) mate in said centering openings (24) of the workpiece pallet (2) that the latter is alignable relative to the chuck (1) in the X-direction and Y-direction and said chuck (1) featuring at the side of the centering spigots (5) a sealing member assembly (7), **characterized in that** disposed between the centering disk (23) and the main body (20) of the workpiece pallet (2) is a sealing disk (21) which overhangs the centering disk (23) radially, said portion of the sealing disk (21) overhanging the centering disk (23) radial such that said portion sealingly comes into contact with a sealing member of the sealing member assembly (7) when the workpiece pallet (2) is securely clamped in place.

2. The clamping fixture as set forth in claim 1, **characterized in that** said sealing disk (21) is arranged parallel to the centering disk (23) and is provided in the region of the centering openings (24) of the centering disk (23) with depressions (33) into which the centering spigots (5) can extend when the workpiece pallet (2) is clamped to the chuck (1).

3. The clamping fixture as set forth in claim 1 or 2, **characterized in that** disposed between said centering disk (23) and a sealing disk (21) is at least one spacer disk (22) which permits an axial excursion of the centering disk (23) in the region of the centering openings (24).

4. The clamping fixture as set forth in claim 3, **characterized in that** said spacer disk (22) is provided with recesses (34) in the region of the centering openings (24) of the centering disk (23).

5. The clamping fixture as set forth in any of the preceding claims, **characterized in that** as viewed cross-sectionally said workpiece pallet (2) is configured substantially rectangular, particularly square and that the sealing member (13) of the sealing member assembly (7) comprises a central recess (14) shaped to correspond to the shape of the workpiece pallet (2) and that the sealing disk (21) is adapted to the shape of the recess and overhanging the latter laterally by a predetermined amount, preferably by approx 1 to 5 mm.

6. The clamping fixture as set forth in claim 5, **characterized in that** said sealing member (13) of the sealing member assembly (7) is provided with a sealing lip (19) in the edge portion of the recess.

7. The clamping fixture as set forth in any of the preceding claims, **characterized in that** said workpiece pallet (2) is provided with four studs (25) which are flat-topped in forming a Z-stop for the workpiece pallet (2) on being clamped to the chuck (1).

8. The clamping fixture as set forth in claim 7, **characterized in that** said studs (25) are configured to simultaneously secure the centering disk (23) as well as the sealing disk (21) to the main body (20) of the workpiece pallet (2).

9. The clamping fixture as set forth in any of the preceding claims, **characterized in that** said sealing member assembly (7) comprises an annular mount (8) configured to mount the sealing member (13) for locating it on and securing it to a basic body (11) of the chuck (1).

10. The clamping fixture as set forth in any of the preceding claims, **characterized in that** at least one flat side of said sealing disk (21) is provided with an indentation.

11. A workpiece pallet for a clamping fixture (1) configured as set forth in any of the preceding claims, said workpiece pallet (2) comprising a main body (20) and a centering disk (23) secured thereto in which second centering members are machined in the form of centering openings (24), **characterized in that** disposed between said centering disk (23) and said main body (20) of the workpiece pallet (2) is a sealing disk (21) which overhangs the centering disk (23) radially.

12. The workpiece pallet (2) as set forth in claim 11, **characterized in that** between said sealing disk (21) and the centering disk (23) at least one spacer disk (22) is disposed such that in the region of the centering openings (24) the centering disk (23) is pliantly flexible in the direction of the main body (20).

13. The workpiece pallet (2) as set forth in claim 11 or 12, **characterized in that** said sealing disk (21) is configured in one piece and is provided with depressions (33) configured materially plastic in the region of the centering openings (24) of the centering disk (23).

14. The workpiece pallet (2) as set forth in any of the claims 11 to 13, **characterized in that** said workpiece pallet (2) is provided with four studs (25) which are flat-topped in forming a Z-stop, the studs (25) simultaneously being configured to secure the centering disk (23) as well as the sealing disk (21) to the main body (20) of the workpiece pallet (2).

15. A sealing device for a clamping fixture (1) configured as set forth in any of the claims 1 to 10, **characterized in that** said sealing device comprises a sealing member assembly (7) for securing to the chuck (1) and a sealing disk (21) for securing to the workpiece pallet (2), the sealing member assembly (7) comprising an annular mount (8) and a sealing member (13) provided with a central recess (14), said sealing member (13) being locatable by means of said annular mount (8) to the chuck (1) and the recess being configured substantially round or square and the shape of the sealing disk (21) corresponding to the shape of the recess (14) and the diameter or side length of the sealing disk (21) being at least 2 mm larger than the cited recess (14) of the sealing member (13).

## Revendications

1. Dispositif de serrage comprenant un mandrin de serrage (1) et un porte-pièce (2) immobilisé par serrage au niveau de celui-ci, sachant que le mandrin de serrage (1) présente des premiers éléments de centrage sous la forme de tourillons de centrage (5) et que le porte-pièce (2) est pourvu d'un corps principal (20) et d'une rondelle de centrage (23) fixée au niveau de celui-ci, dans laquelle des deuxièmes éléments de centrage sous la forme d'ouvertures de centrage (24) sont encastrés, et sachant que les tourillons de centrage (5) du mandrin de serrage (1) se destinent à venir en prise avec les ouvertures de centrage (24) du porte-pièce (2) de telle manière que ce dernier peut être orienté par rapport au mandrin de serrage (1) dans une direction X ou Y, et sachant que le mandrin de serrage (1) du côté des tourillons de centrage (5) est pourvu d'un ensemble formant un élément étanche (7), **caractérisé en ce qu'**une rondelle étanche (21) est disposée entre la rondelle de centrage (23) et le corps principal (20) du porte-pièce (2), laquelle dépasse de la rondelle de centrage (23) dans une direction radiale, sachant que la zone, dépassant de la rondelle de centrage (23) dans une direction radiale, de la rondelle étanche (21) est réalisée de telle manière qu'elle vient en appui en assurant l'étanchéité au niveau d'un élément étanche (13) de l'ensemble formant un élément étanche (7) lors de l'immobilisation par serrage du porte-pièce (2).

2. Dispositif de serrage selon la revendication 1, **caractérisé en ce que** la rondelle étanche (21) est disposée de manière parallèle par rapport à la rondelle de centrage (23) et est pourvue, dans la zone des ouvertures de centrage (24) de la rondelle de centrage (23), de renfoncements (33), dans lesquels les tourillons de centrage (5) peuvent s'étendre lors de l'immobilisation par serrage du porte-pièce (2) au niveau du mandrin de serrage (1).

3. Dispositif de serrage selon la revendication 1 ou 2, **caractérisé en ce qu'**au moins une rondelle d'écartement (22) est disposée entre la rondelle de centrage (23) et la rondelle étanche (21) de telle manière qu'une déviation axiale de la rondelle de centrage (23) est rendue possible dans la zone des ouvertures de centrage (24).

4. Dispositif de serrage selon la revendication 3, **caractérisé en ce que** la rondelle d'écartement (22) est pourvue, dans la zone des ouvertures de centrage (24) de la rondelle de centrage (23), d'évidements (34).

5. Dispositif de serrage selon l'une quelconque des revendications précédentes, **caractérisé en ce que** le porte-pièce (2) est réalisé, vu dans la section transversale, essentiellement de manière rectangulaire, en particulier de manière carrée, et **en ce que** l'élément étanche (13) de l'ensemble formant un élément étanche (7) présente un évidement (14) central, dont la forme correspond à la forme du porte-pièce (2), et **en ce que** la rondelle étanche (21) est adaptée à la forme de l'évidement (14) et dépasse celui-ci latéralement d'une longueur présentant une valeur donnée, de préférence d'environ 1 - 5 mm.

6. Dispositif de serrage selon la revendication 5, **caractérisé en ce que** l'élément étanche (13) de l'ensemble formant un élément étanche (7) est pourvu, dans la zone de bord de l'évidement, d'une lèvre étanche (19).

7. Dispositif de serrage selon l'une quelconque des revendications précédentes, **caractérisé en ce que** le porte-pièce (2) est pourvu de quatre écrous (25), dont la face frontale est plane et forme une butée en Z pour le porte-pièce (2) lors de l'immobilisation par serrage au niveau du mandrin de serrage (1).

8. Dispositif de serrage selon la revendication 7, **caractérisé en ce que** les boulons (25) sont réalisés dans le même temps aux fins de la fixation de la rondelle de centrage (23) ainsi que de la rondelle étanche (21) au niveau du corps principal (20) du porte-pièce (2).

9. Dispositif de serrage selon l'une quelconque des revendications précédentes, **caractérisé en ce que** l'ensemble formant un élément étanche (7) comprend une garniture (8) de forme annulaire, qui est réalisée aux fins du logement de l'élément étanche (13) et qui peut être posée et fixée sur un corps de base (11) du mandrin de serrage (1).

10. Dispositif de serrage selon l'une quelconque des revendications précédentes, **caractérisé en ce qu'**au moins une face plane de la rondelle étanche (21) est pourvue d'un estampage (39).

11. Porte-pièce pour un dispositif de serrage (1) réalisé selon l'une quelconque des revendications précédentes, sachant que le porte-pièce (2) est pourvu d'un corps principal (20) et d'une rondelle de centrage (23) fixée au niveau de ce dernier, dans laquelle des deuxièmes éléments de centrage sous la forme d'ouvertures de centrage (24) sont encastrés, **caractérisé en ce qu'**une rondelle étanche (21) est disposée entre la rondelle de centrage (23) et le corps principal (20), laquelle dépasse de la rondelle de centrage (23) dans une direction radiale.

12. Porte-pièce (2) selon la revendication 11, **caractérisée en ce qu'**au moins une rondelle d'écartement (22) est disposée entre la rondelle étanche (21) et la rondelle de centrage (23) de telle manière que la rondelle de centrage (23) peut être déviée de manière élastique par ressorts dans la zone des ouvertures de centrage (24) en direction du corps principal (20).

13. Porte-pièce (2) selon la revendication 11 ou 12, **caractérisé en ce que** la rondelle étanche (21) est réalisée d'un seul tenant et est pourvue, dans la zone des ouvertures de centrage (24) de la rondelle de centrage (23), de renfoncements (33) réalisés avec un matériau en plastique.

14. Porte-pièce (2) selon l'une quelconque des revendications 11 à 13, **caractérisé en ce que** le porte-pièce (2) est pourvu de quatre boulons (25), dont la face frontale présente une surface plane faisant office de butée en Z, sachant que les boulons (25) sont réalisés dans le même temps aux fins de la fixation de la rondelle de centrage (23) ainsi que de la rondelle étanche (21) au niveau du corps principal (20) du porte-pièce (2).

15. Dispositif d'étanchéité pour un dispositif de serrage (1) réalisé selon l'une quelconque des revendications 1 à 10, **caractérisé en ce que** le dispositif d'étanchéité comprend un ensemble formant un élément étanche (7) à fixer au niveau du mandrin de serrage (1) et une rondelle étanche (21) à fixer au niveau du porte-pièce (2), sachant que l'ensemble formant un élément étanche (7) présente une garniture (8) de forme annulaire et un élément étanche (13) pourvu d'un évidement (14) central, lequel peut être fixé au niveau du mandrin de serrage (1) au moyen de la garniture (8) de forme annulaire et sachant que l'évidement (14) est réalisé essentiellement de manière ronde ou carrée et que la forme de la rondelle étanche (21) correspond à la forme de l'évidement (14), et sachant que le diamètre ou la longueur latérale de la rondelle étanche (21) est plus grand/grande d'au moins 2 mm que l'évidement (14) évoqué de l'élément étanche (13).
